# EUROPÄISCHE PATENTANMELDUNG

(11) **EP 1 842 833 A1**
(43) Veröffentlichungstag der Anmeldung: **10.10.2007**
(21) Anmeldenummer: 07006931.5
(22) Anmeldetag: 03.04.2007
(51) Int. Cl.: C03B 33/033

(54) **Verfahren und Vorrichtung zum Heraustrennen eines Teiles, bestimmt durch eine vorgeritzte geschlossene Kontur, aus einer Platte aus einem spröden Material**

(30) Priorität: 07.04.2006 DE 102006016926
(71) Anmelder: JENOPTIK Automatisierungstechnik GmbH, 07745 Jena (DE)
(72) Erfinder: Acker, Stefan, 07646 Waldeck (DE); Weisser, Jürgen, 07743 Jena (DE); Ullmann, Ronny, 07768 Altenberga (DE)
(74) Vertreter: Schaller, Renate

(57) **Zusammenfassung**

Die Erfindung betrifft ein Verfahren zum Heraustrennen eines Teiles, dessen Form durch eine vorgeritzte geschlossene Kontur (Ritz (2)) bestimmt ist, aus einer Platte (7), bestehend aus einem spröden Material, wobei die Platte (7) außerhalb des Ritzes (2) zur Auflage gebracht wird und innerhalb des Ritzes (2) und einem diesen umschließenden schmalen Randbereich konstanter Breite von der dem Ritz (2) gegenüberliegenden Seite her mit einem Vakuum beaufschlagt wird, sodass sich entlang dem Ritz (2) ein die Platte (7) vollständig durchtrennender Trennriss ausbildet, wobei die Durchbiegung der Platte (7) in Folge des Vakuums begrenzt wird.

Die Erfindung betrifft ebenfalls eine Vorrichtung zur Durchführung des Verfahrens.

## Beschreibung

Zum Erzeugen von Teilen mit einer beliebig geformten, geschlossenen Kontur (Umfangslinie) aus einer Platte, bestehend aus einem spröden Material ist, ist es noch immer eine weitverbreitete Methode, die Platte entlang einer Kontur mechanisch zu ritzen und anschließend manuell zu brechen.

Dabei wird ein Diamant oder Hartmetallrädchen, mit einer auf die Materialart und Materialdicke abgestimmten Andruckkraft und Andruckwinkel auf der Platte entlang der vorgesehenen Kontur geführt, wodurch eine Ritzspur erzeugt wird.
Durch besonders hohe Druckkräfte kann der Ritz nahezu durch das Material getrieben werden, sodass das Teil nach dem anschließenden Setzen von Befreiungsschnitten manuell herausgebrochen werden kann.

Das Setzen von Befreiungsschnitten ist notwendig, unabhängig davon, mit welchem Verfahren der Ritz eingebracht wird und wie dieser durch das Material hindurchgetrieben wird. Sie werden zwischen der Kontur und dem Plattenrand, in der Regel lotrecht zur Kontur gesetzt. Nach dem Durchtrennen der Platte entlang der Befreiungsschnitte kann das sich jeweils zwischen zwei Befreiungsschnitten befindende Plattensegment entfernt werden, wodurch das Teil freigelegt und somit ohne Schaden zu nehmen herausgelöst werden kann.

Weniger tiefe Risse werden durch eine anschließende Einwirkung mechanischer Kräfte durch die Platte getrieben. Üblich ist es hierzu die geritzte Platte mit der geritzten Seite auf eine Unterlage aufzulegen und dann auf der anderen Seite mit einem Andruckrädchen entlang der geritzten Kontur entlang zu fahren.
Bekannt ist es auch, durch Klopfen entlang der Kontur den Ritz zu vertiefen.

Die Qualität der Trennkante aller mechanischen Verfahren ist ungenügend. Ausmuschelungen, Absplitterungen und Mikrorisse sind nicht zu vermeiden, sodass in der Regel eine Nacharbeit notwendig ist.

Diese Nachteile entstehen nicht beim Ritzen durch die Erzeugung thermischer Spannungen mittels Laser. Ein solches Verfahren ist beispielhaft in der WO 96/20062 beschrieben.
Praktische Versuche haben ergeben, dass bei dem hier beschriebenen Verfahren kein das Material vollständig durchdringender Ritz erzeugt wird, wodurch auch hier, wie bei dem mechanischen Ritzen, zusätzliche Maßnahmen notwendig sind um das Teil herauszutrennen.

In der DE 100 01 292 C1 ist ein Verfahren zum Heraustrennen eines Teiles mit einer geschlossenen Kontur aus einer ebenen Platte aus sprödbrüchigem Material, insbesondere Glas, bekannt, bei dem mittels eines bewegten Laserstrahls und einem nachlaufenden Kühlspot ein Ritz entlang der Kontur erzeugt wird und dieser Ritz durch ein zweites Abfahren der Kontur mit dem Laserstrahl und geänderten Prozessparametern vollständig durch die Platte getrieben wird.

Ein im Wesentlichen gleiches Verfahren ist aus der DE 10 2004 012 402 B3 bekannt, wobei hier das Teil aus einer gewölbten Platte herausgetrennt werden soll.

Praktische Versuche haben gezeigt, dass das vollständige Durchtrennen einer Platte durch eine zweite Einwirkung der Laserstrahlung zwar funktioniert, jedoch nicht immer eine senkrechte Bruchkante entsteht, sodass die Kantenqualität nicht in jedem Fall ausreichend ist.

Der Erfindung liegt die Aufgabe zu Grunde, ein Verfahren zu finden, mit dem aus einer ebenen oder gewölbten Platte, bestehend aus einem spröden Material, Teile mit einer vorgeritzten geschlossen Kontur herausgelöst werden können, unabhängig davon, mit welchem Verfahren der Ritz im Voraus erzeugt wurde.
Des Weiteren soll das Verfahren geeignet sein, um eine Bruchkante zu erzielen, die über die gesamte Kontur senkrecht zur Oberfläche der Platte verläuft und eine hohe Kantenqualität aufweist.

Es ist auch Aufgabe der Erfindung, eine zur Durchführung des erfindungsgemäßen Verfahrens geeignete Vorrichtung zu finden.

Diese Aufgabe wird für ein Verfahren zum Heraustrennen eines Teiles, dessen Form durch eine vorgeritzte geschlossene Kontur bestimmt ist, aus einer Platte, bestehend aus einem spröden Material gemäß Anspruch 1 und für eine Vorrichtung zur Durchführung eines solchen Verfahrens gemäß Anspruch 6 gelöst.

Vorteilhafte Ausführungen sind in den Unteransprüchen beschrieben.

Die Erfindung soll nachfolgend mittels einer Zeichnung anhand von Ausführungsbeispielen näher erläutert werden. Hierzu zeigt:
- Fig. 1: eine erfindungsgemäße Vorrichtung in Draufsicht
- Fig. 2: eine Vorrichtung gemäß Fig. 1 als Schnittbild

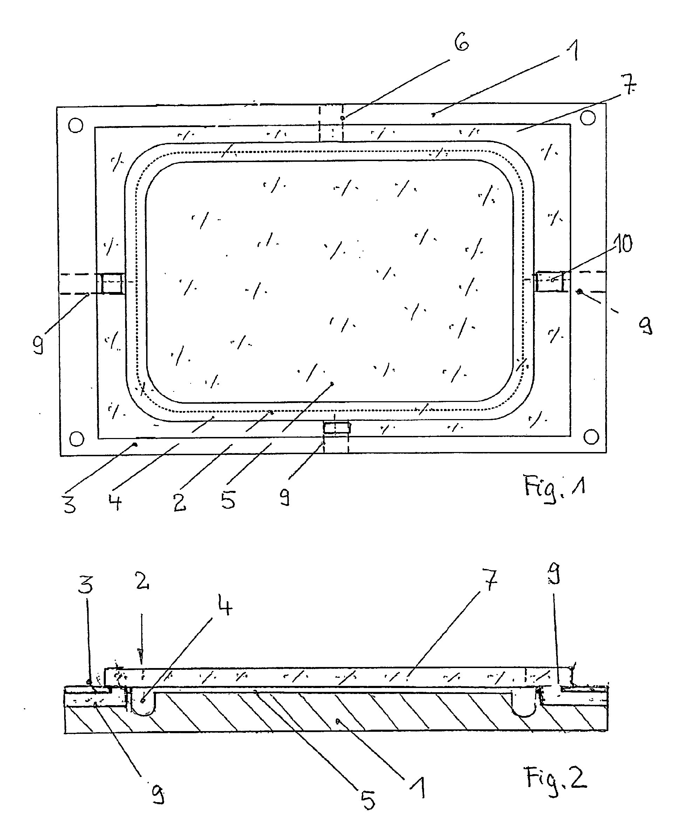

Eine erfindungsgemäße Vorrichtung (Fig.1, Fig.2) besteht im Wesentlichen aus einer Aufnahmeplatte 1 für eine Platte 7, aus der ein Teil, definiert durch eine vorgeritzte Kontur (nachfolgend Ritz 2 genannt) herausgelöst werden soll sowie eine in den Figuren nicht dargestellte Vakuumpumpe, die mit einer durch die innere Form der Aufnahmeplatte 1 und der Platte 7 gebildeten Vakuumkammer in Verbindung steht.

Die Aufnahmeplatte 1 weißt zwingend eine Auflagefläche 3, eine Nut 4, eine Absenkfläche 5 und einen Ansaugkanal 6 auf.

In einem ersten Ausführungsbeispiel, dargestellt in den Fig.1 und 2, ist die Aufnahmeplatte 1 für die Aufnahme einer rechteckigen ebenen Platte 7 konzipiert. Entsprechend ist die Auflagefläche 3 eine ebene rechteckige Fläche mindestens in der Größe der Platte 7.
Innerhalb der Auflagefläche 3 befindet sich eine die Auflagefläche 3 nach innen hin begrenzende Nut 4, deren Verlauf durch den Verlauf des Ritzes 2 vorgegeben ist.

Entsprechend muss die Platte 7 so auf der Auflagefläche 3 positioniert werden, dass sich der Ritz 2 oberhalb der Nut 4, bevorzugt mittig der Nut 4 befindet.
Bei dem in Fig. 1 und 2 dargestellten Ausführungsbeispiel bildet der Ritz 2 eine im Wesentlichen rechteckige Form mit abgerundeten Ecken. Ein so geformtes Teil findet beispielsweise als Rückspiegel für Fahrzeuge Verwendung.

Die von der Nut 4 eingeschlossene Innenfläche stellt die Absenkfläche 5 dar, die als ebene Fläche parallel zur Auflagefläche 3 und zu dieser hin tiefer liegt. Die jeweils optimale Tiefe, bestimmend für die maximal mögliche Durchbiegung der Platte 7, wird in Abhängigkeit vom Material und der Dicke der Platte 7 gewählt. Bei Plattenstärken von ca. 0,5 mm bis zu mehreren mm haben sich Tiefen zwischen 0,05 bis 1 mm als geeignet erwiesen. So wurde für eine Plattenstärke von 1,6 mm eine Tiefe von 0,1 mm als optimal festgestellt. Je dicker die Platte, desto größer die Differenz.

Die aufgelegte Platte 7 liegt demnach nur in ihrem Randbereich außerhalb der Nut 4 auf und bildet so gemeinsam mit der Innenform der Aufnahmeplatte 1, bestimmt durch die Nut 4 und der Absenkfläche 5, gemeinsam eine Vakuumkammer, die über den Ansaugkanal 6 mit der Vakuumpumpe in Verbindung steht. Die Nut 4 ist breiter und tiefer als die Tiefe (Höhendifferenz zwischen Auflagefläche 3 und Absenkfläche 5), vorteilhaft zwischen 2x2 mm²-10x10 mm² im Querschnitt.

Insbesondere, wenn der Ritz 2 durch thermisch induzierte Spannungen mittels Laser erzeugt wurde, ist es vorteilhaft, wenn der Ansaugkanal 6 in die Nut 4 an eine Stelle mündet, von der der Ritzanfang, am weitesten entfernt ist.
Üblicherweise wird auch hier ein Initialriss mechanisch erzeugt, wodurch zwangsläufig nicht nur der eine Mikroriss erzeugt wird, der anschließend durch die Einwirkung des Lasers vorwärtsgetrieben wird, sondern es entstehen selbst bei einem mechanischen Initialriss von nur wenigen µm eine Vielzahl von Mikrorissen. Durch die vorteilhafte Trennrissausbildung wird am besten vermieden, dass der Trennriss in einen der zufälligen Mikrorisse läuft.

D.h. bei der Konzipierung der Vorrichtung und der Verfahrensparameter sind nicht nur die Eigenschaften der Platte 7 und der Verlauf des Ritzes 2 zu beachten, sondern vorteilhaft auch an welcher Stelle der Ritz begonnen wurde zu erzeugen.

Die Kantenqualität wird auch weiter verbessert, wenn der auf der Auflagefläche 3 aufliegende Randbereich der Platte 7 auf die Auflagefläche 3 aufgedrückt wird, was z. B. mit einer Spanneinrichtung möglich ist.

Um das Teil, nachdem der Ritz 2 vollständig durch die Platte 7 getrieben wurde, aus der Platte 7 heraus lösen zu können, sind, wie aus dem Stand der Technik bereits bekannt, in der Platte 7 Befreiungsschnitte 10 gesetzt. Es soll an dieser Stelle an dem für den Fachmann bekannten Begriff "Befreiungsschnitt" festgehalten werden, obwohl es sich hier genaugenommen ebenfalls um Risse handelt, die in der Regel mit dem gleichen Werkzeug eingebracht werden wie der, die Kontur der Teiles, bestimmende umlaufende Ritz.

Die Befreiungsschnitte 10 müssen nicht zwingend auch mit der erfindungsgemäßen Vorrichtung durchbrochen werden, es ist jedoch vorteilhaft.
Zu diesem Zweck sind Hilfsansaugkanäle 9 vorhanden, in einer gleichen Anzahl wie Befreiungsschnitte 10. Die Hilfsansaugkanäle 9 sind so in der Aufnahmeplatte 1 angeordnet, dass die Befreiungsschnitte 10 nach Auflage der Platte 7 mittig über ihnen verlaufen, d.h. die Befreiungsschnitte 10 verlaufen in die gleiche Richtung wie die Mittelachsen der Hilfsansaugkanäle 9. Bei dem in den Fig. 1 und 2 dargestellten Ausführungsbeispiel sind drei Befreiungsschnitte 10 vorhanden, die jeweils mittig der Seitenflächen des Teils auf den Ritz 2 treffen.
Während der Ansaugkanal 6 ein zur Nut 4 hin offener Kanal ist, sind die Hilfsansaugkanäle 9 zur Nut 4 hin geschlossen, d.h. zwischen den Hilfsansaugkanälen 9 und der Nut 4 befindet sich je eine Zwischenwand deren Stärke in Abhängigkeit von der Dicke der Platte 7 so gewählt wird, dass sie einerseits möglichst dünn ist, damit der Befreiungsschnitt 10 weitestgehend über seine gesamte Länge durch die Saugkraft des Vakuums beaufschlagt wird, andererseits aber beim Anlegen des Vakuums nicht durchbrochen wird.

Um ein Teil, bestimmt durch eine bereits vorgeritzte geschlossene Kontur, erfindungsgemäß aus einer Platte 7 herauszulösen, wird die Platte 7 auf die Auflagefläche 3 der Aufnahmeplatte 1 so aufgelegt, dass der bereits in der Platte 7 vorhandene Ritz 2 (vorgeritzte Kontur) mittig über der Nut 4 positioniert wird und sich die vorhandenen Befreiungsschnitte 10 gegebenenfalls mittig über den Hilfsansaugkanälen 9 befinden. Mit dem Aktivieren der Vakuumpumpe, die über Leitungen mit dem Ansaugkanal 6 und den gegebenenfalls vorhandenen Hilfsansaugkanälen 9 verbunden sind, wird in der Vakuumkammer, gebildet durch die Nut 4, der Absenkfläche 5 und der Platte 7, ein Vakuum erzeugt. Da sich das Vakuum, beginnend vom Ansaugkanal 6 her aufbaut, wird auch an diesem Punkt der den Ritz 2 durch das Material durchtreibende Trennriss ausgelöst, der sich zwei Trennrisse ausbildend nach beiden Seiten verlaufend fortsetzt, sodass die beiden Trennrisse nach dem Durchlaufen der Kontur zusammentreffen. Gleichzeitig wird das Teil auf die Absenkfläche 5 gezogen, sodass entlang der Kontur Scherkräfte wirken und der Ritz 2 geöffnet wird. Die Stärke des notwenigen Vakuums ist abhängig vom Material und der Dicke der Platte 7. Für dünnere Glasplatten kann bereits ein Druck von 0,1 bar ausreichend sein, während für dickere Glasplatten bei einer Dicke von bis zu 2,5 mm, ein Vakuumdruck von bis zu 0,001 bar erforderlich sein kann. Ist die Platte 7 nicht aus Glas, sondern z.B. aus Keramik oder Glaskeramik, liegt der erforderliche Vakuumdruck in vergleichbaren Bereichen oder höher.

Sofern der Punkt des Auslösens, der vom Ritzanfang und Ritzende der am entferntesten liegende Punkt auf dem Ritz 2 ist, treffen die Trennrisse am Ritzanfang- und Ritzende zusammen, was noch eine zusätzliche Verbesserung der Kantenqualität bewirkt.

Da der Trennriss praktisch eine Spaltbreite von Null hat, kann das nunmehr herausgetrennte Teil dennoch nicht aus der Platte 7 herausgelöst werden. Wie bereits erläutert, wurden zu diesem Zweck in die Platte 7 Befreiungsschnitte 10 eingebracht. Um diese zweckmäßigerweise zeitgleich mit dem Ritz 2 durch das Material zu treiben, wird in den Hilfsansaugkanälen 9 ebenfalls ein Vakuum erzeugt. Da die Hilfsansaugkanäle 9 keine Verbindung mit der Vakuumkammer haben, sondern nur zur aufliegenden Platte 7 hin geöffnet sind, beeinflussen sie die Trennrissbildung im Ritz 2 nicht, sondern wirken nur auf die Befreiungsschnitte 10.

Nachdem der Ritz 2 und die Befreiungsschnitte 10 vollständig durch die Platte 7 getrieben sind, wird die Vakuumpumpe abgeschalten und das Teil kann mit dem Entfernen der Plattensegmente herausgelöst werden.

Das erfindungsgemäße Verfahren und die erfindungsgemäße Vorrichtung sind auch vorteilhaft anwendbar, wenn die Platte 7 gewölbt ist. Zu diesem Zweck muss der Ritz 2 seitens der konkaven Plattenseite eingebracht sein und die Aufnahmeplatte 1 muss eine auf die Plattenwölbung abgestimmte konkave Auflagefläche 3 aufweisen.

Dem Fachmann auf dem Gebiet dieser Erfindung erschließt sich, dass die Erfindung nicht auf die Einzelheiten der vorstehend beispielhaft angeführten Ausführungsformen beschränkt ist, sondern dass die vorliegende Erfindung in anderen speziellen Formen verkörpert sein kann, ohne vom Umfang der Erfindung abzuweichen, die durch die anliegenden Ansprüche festgelegt ist.

### Bezugszeichenliste

- 1: Aufnahmeplatte
- 2: Ritz
- 3: Auflagefläche
- 4: Nut
- 5: Absenkfläche
- 6: Ansaugkanal
- 7: Platte
- 9: Hilfsansaugkanal
- 10: Befreiungsschnitt

## Patentansprüche

1. Verfahren zum Heraustrennen eines Teiles, dessen Form durch eine vorgeritzte geschlossene Kontur (Ritz (2)) bestimmt ist, aus einer Platte (7), bestehend aus einem spröden Material, **dadurch gekennzeichnet,**
**dass** die Platte (7) außerhalb des Ritzes (2) zur Auflage gebracht wird und innerhalb des Ritzes (2) und einem diesen umschließenden schmalen Randbereich konstanter Breite von der dem Ritz (2) gegenüberliegenden Seite her mit einem Vakuum beaufschlagt wird, sodass sich entlang dem Ritz (2) ein die Platte (7) vollständig durchtrennender Trennriss ausbildet, wobei die in Folge des Vakuums entstehende Durchbiegung der Platte (7) begrenzt gehalten wird.

2. Verfahren nach Anspruch 1, **dadurch gekennzeichnet,**
**dass** das Vakuum beginnend von dem gegenüber dem Ritzanfang am weitesten entfernten Punkt gebildet wird.

3. Verfahren nach Anspruch 1, **dadurch gekennzeichnet**
**dass** in der Platte (7) vorhandene Befreiungsschnitte (10), ebenfalls mit einem Vakuum, welches jeweils beschränkt nur auf einen einzelnen Befreiungsschnitt (10) wirkt, beaufschlagt werden, damit diese vollständig durch die Platte (7) getrieben werden.

4. Verfahren nach Anspruch 1, **dadurch gekennzeichnet,**
**dass** der schmale Randbereich im Bereich von 1 mm bis 5 mm liegt.

5. Verfahren nach Anspruch 1, **dadurch gekennzeichnet,**
**dass** die Platte (7) während des Ansaugens durch das Vakuum im aufliegenden Bereich angedrückt wird.

6. Vorrichtung zum Heraustrennen eines Teiles, dessen Form durch eine vorgeritzte geschlossene Kontur (Ritz (2)) bestimmt ist, aus einer Platte (7), bestehend aus einem spröden Material, mit einer Aufnahmeplatte (1) auf der die Platte (7) auf einer Auflagefläche (3) definiert aufgelegt wird, **dadurch gekennzeichnet,**
**dass** die Auflagefläche (3) nach innen durch eine Nut (4) begrenzt ist, deren Mittellinie dem Verlauf des Ritzes (2) entspricht und eine Absenkfläche (5) umschließt, die parallel zur Auflagefläche (3) unterhalb dieser liegt, sowie einer Vakuumpumpe die über einen Ansaugkanal (6) mit der Nut (4) in Verbindung steht, um in einer durch die Nut (4), der Absenkfläche (5) und der Platte (7) gebildeten Vakuumkammer, ein Vakuum zu erzeugen.

7. Vorrichtung nach Anspruch 6, **dadurch gekennzeichnet,**
**dass** der Ansaugkanal (6) an dem zum Ritzanfang des Ritzes (2) der aufgelegten Platte (7) am weitest entfernten Punkt ausgebildet ist.

8. Vorrichtung nach Anspruch 5 oder 6, **dadurch gekennzeichnet,**
**dass** eine Spannvorrichtung vorhanden ist, mit der die Platte (7) auf die Auflagefläche (3) gedrückt wird.

9. Vorrichtung nach einem der Ansprüche 5 - 8 , **dadurch gekennzeichnet,**
**dass** in der Aufnahmeplatte (1) Hilfsansaugkanäle (9) vorhanden sind, die an einem Ende zur Nut (4) hin geschlossen sind und am anderen Ende mit der Vakuumpumpe verbunden sind, sowie unterhalb der aufgelegten Platte (7) zu dieser hin geöffnet und so angeordnet sind, dass die jeweils darüber zur Auflage kommenden, in der Platte (7) vorhandenen Befreiungsschnitte (10), entlang der Mittelachsen der Hilfsansaugkanäle (9) verlaufen.

10. Vorrichtung nach einem der Ansprüche 5 - 9 , **dadurch gekennzeichnet,**
**dass** die Auflagefläche (3) zur Aufnahme einer ebenen Platte (7) eben ausgebildet ist.

11. Vorrichtung nach einem der Ansprüche 5 - 8 , **dadurch gekennzeichnet,**
**dass** die Auflagefläche (3) zur Aufnahme einer gewölbten Platte (7) gewölbt ausgebildet ist.
